(19) Europäisches Patentamt
European Patent Office
Office européen des brevets

(11) **EP 2 633 892 A1**

(12) **EUROPEAN PATENT APPLICATION**
published in accordance with Art. 153(4) EPC

(43) Date of publication:
**04.09.2013 Bulletin 2013/36**

(51) Int Cl.:
**B01D 39/16** (2006.01)   **D04H 1/559** (2012.01)
**F02M 35/024** (2006.01)

(21) Application number: **11836384.5**

(22) Date of filing: **27.10.2011**

(86) International application number:
**PCT/JP2011/074770**

(87) International publication number:
**WO 2012/057251 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2010   JP 2010241861**

(71) Applicants:
• **MAHLE Filter Systems Japan Corporation**
  **Toshima-ku, Tokyo 171-0004 (JP)**
• **Teijin Limited**
  **Osaka-shi, Osaka 541-0054 (JP)**

(72) Inventors:
• **HAMADA, Yuiti**
  **Toshima-ku**
  **Tokyo 171-004 (JP)**

• **SUZUKI, Mitutosi**
  **Toshima-ku**
  **Tokyo 171-0004 (JP)**
• **ISHII, Hiroyuki**
  **Toshima-ku**
  **Tokyo 171-0004 (JP)**
• **INAGAKI, Kenji**
  **Ibaraki-shi**
  **Osaka 567-0006 (JP)**

(74) Representative: **Hallybone, Huw George**
  **Carpmaels & Ransford LLP**
  **One Southampton Row**
  **London WC1B 5HA (GB)**

(54) **MULTILAYER FILTER MEDIUM FOR USE IN FILTER, AND FILTER**

(57)     Provided are a multilayer filter medium for use in a filter, which makes it possible to obtain a filter having high collection efficiency, low pressure loss and a long filter lifetime, and a filter using the multilayer filter medium for use in a filter.

A multilayer filter medium for use in a filter, which is used as a constituent member of a filter and has a multilayer structure, comprising a wet type nonwoven fabric layer A containing 0.5 to 20% by weight, based on layer weight, of short-cut nanofibers which are composed of a fiber-forming thermoplastic polymer, have a single fiber diameter (D) of 100 to 1,000 nm and are cut so that the ratio (L/D) of the length (L) to the single fiber diameter (D) is within the range of 100 to 2, 500 and core-sheath conjugate type binder fibers having a single fiber diameter of 5 μm or more, and a nonwoven fabric layer B having a lower density than that of the wet type nonwoven fabric layer A; and a filter using the multilayer filter medium for use in a filter and having the nonwoven fabric layer B arranged on a fluid inlet side.

**EP 2 633 892 A1**

**Description**

[Technical Field]

The present invention relates to a multilayer filter medium for use in a filter, which makes it possible to obtain a filter having high collection efficiency, low pressure loss and a long filter lifetime, and to a filter using the multilayer filter medium for use in a filter.

[Background Art]

As filter media for use in filters, various ones have hitherto been proposed. For example, there have been proposed an airlaid multilayer filter medium having a fiber fineness gradient (for example, see Patent Document 1), one in which ultrafine fibers obtained by an electrospinning process are laminated on a surface Layer of a general-purpose nonwoven fabric (for example, see Patent Document 2 and Patent Document 3), and the like.

However, the airlaid multilayer filter medium having a fiber fineness gradient has achieved low pressure loss and a high filter lifetime, but has been insufficient for collecting fine dusts. Further, the filter medium in which the ultrafine fibers are laminated on the surface layer of the general-purpose nonwoven fabric comes into a state planarly coated with the ultrafine fibers, so that there has been a problem of an easy increase in pressure loss, easy omission of the fibers because of their insufficient adhesiveness with the nonwoven fabric as a substrate, or the like.

Incidentally, there has also been proposed a nonwoven fabric composed of short-cut nanofibers obtained by cutting nanofibers (for example, see Patent Document 4). However, this has placed emphasis on achievement of initial efficiency, and has not been still sufficient in terms of filter lifetime.

[Prior-Art Documents]

[Patent Documents]

[Patent Document 1] JP-A-2004-301121
[Patent Document 2] JP-A-2006-289209
[Patent Document 3] JP-A-2007-170224
[Patent Document 4] Pamphlet of International Publication No. 2008/130019

[Outline of the Invention]

[Problems That the Invention Is to Solve]

The present invention has been made in view of the above-mentioned background, and an object thereof is to provide a multilayer filter medium for use in a filter, which makes it possible to obtain a filter having high col lection efficiency, low pressure loss and a long filter lifetime, and a filter using the multilayer filter medium for use in a filter.

Means for Solving the Problems

In order to solve the above-mentioned problems, the present inventors have made intensive studies. As a result, it has been found that a balance of pressure loss, collection efficiency and lifetime can be obtained by integrating a wet type nonwoven fabric containing short-cut nanofibers having a specific fiber diameter and fiber length (hereinafter also referred to as "ultrafine fibers") and core-sheath conjugate type binder fibers (hereinafter also referred to as "blinder fibers") with a nonwoven fabric having a lower density than that of the wet type nonwoven fabric by lamination. The inventors have made further intensive studies, thereby leading to completion of the present invention.

Thus, according to the present invention, there is provided "a multilayer filter medium for use in a filter, which is used as a constituent member of a filter and has a multilayer structure, comprising a wet type nonwoven fabric layer A containing 0.5 to 20% by weight, based on layer weight, of short-cut nanofibers which are composed of a fiber-forming thermoplastic polymer, have a single fiber diameter (D) of 100 to 1,000 nm and are cut so that the ratio (L/D) of the length (L) to the single fiber diameter (D) is within the range of 100 to 2, 500 and core-sheath conjugate type binder fibers having a single fiber diameter of 5 $\mu$m or more, and a nonwoven fabric layer B having a lower density than that of the wet type nonwoven fabric layer A."

In that case, the above-mentioned short-cut nanofibers are preferably ones obtained by dissolving and removing a sea component from a conjugate fiber comprising an island component composed of a fiber-forming thermoplastic polymer and having an island diameter (D) of 100 to 1,000 nm and a sea component composed of a polymer more easily soluble in an alkaline aqueous solution than the above-mentioned fiber-forming thermoplastic polymer.

Further, in the above-mentioned conjugate fiber, the sea component is preferably polyethylene terephthalate copolymerized with 6 to 12% by mole of 5-sodium sulfonic acid and 3 to 10% by weight of polyethylene glycol having a molecular weight of 4,000 to 12,000.

Furthermore, in the above-mentioned conjugate fiber, the island component is preferably a polyester.

In addition, in the above-mentioned conjugate fiber, the number of islands is preferably 100 or more.

In the multilayer filter medium for use in a filter of the present invention, it is preferred that the nonwoven fabric layer B comprises an air-laid nonwoven fabric composed of fibers having a fiber length of 10 mm or less.

Further, the nonwoven fabric layer B is preferably one containing at least 30% by weight or more of binder fibers.

Furthermore, the ratio MB/MA of the density (MB) of the nonwoven fabric layer B and the density (MA) of the wet type nonwoven fabric layer A is preferably within the range of 0.1 to 0.8.

In addition, the weight ratio of the wet type nonwoven fabric layer A and the nonwoven fabric layer B is preferably within the range of 90/10 to 10/90.

Further, it is preferred that the nonwoven fabric layer B is composed of two or more layers.

Then, according to the present invention, there is provided a filter using the above-mentioned multilayer filter medium for use in a filter and having the nonwoven fabric layer B arranged on a fluid inlet side. In that case, the filter is preferably an air filter for an internal combustion engine.

[Advantages of the Invention]

According to the present invention, there are obtained a multilayer filter medium for use in a filter, which makes it possible to obtain a filter having high collection efficiency, low pressure loss and a long filter lifetime, and a filter using the multilayer filter medium for use in a filter.

[Mode for Carrying Out the Invention]

A mode for carrying out the invention will be described in detail below.

<Wet Type Nonwoven Fabric Layer A>

A wet type nonwoven fabric layer A constituting the multilayer filter medium for use in a filter of the present invention comprises short-cut nanofibers and core-sheath conjugate type binder fibers.

Short-Cut Nanofibers:

In the present invention, it is of vital importance that the short-cut nanofibers are composed of a fiber-forming thermoplastic polymer, have a fiber diameter (D) of 100 to 1, 000 nm, preferably 300 to 800 nm and particularly preferably 550 to 800 nm, and are cut so that the ratio (L/D) of the fiber length (L) to the fiber diameter (D) is within the range of 100 to 2, 500, preferably 300 to 1, 500 and particularly preferably 500 to 1,000. When the above-mentioned fiber diameter (D) is more than 1,000 nm, the pore diameter of pores which appear on a surface of the wet type nonwoven fabric becomes uneven (that is to say, the ratio of the average pore size and the maximum pore size increases) . This is therefore unfavorable. On the other hand, when the above-mentioned fiber diameter (D) is less than 100 nm, the fibers unfavorably become liable to drop out of a net at the time of papermaking. Further, when the above-mentioned radio (L/D) is more than 2, 500, entanglement of the fibers occurs at the time of papermaking to cause poor dispersion. Accordingly, the pore diameter of pores which appear on the surface of the wet type nonwoven fabric becomes uneven (that is to say, the ratio of the average pore size and the maximum pore size increases). This is therefore unfavorable. On the other hand, when the above-mentioned ratio is less than 100, linkage between the fibers is extremely weakened, and in a papermaking process, transfer thereof from a wire part to a blanket becomes difficult, unfavorably resulting in a deterioration of process stability.

Although a method for producing the ultrafine fibers as described above is not particularly limited, a method disclosed in a pamphlet of International Publication No. 2005/095686 is preferred. That is to say, in terms of the fiber diameter and its uniformity, preferred are ones obtained by cutting a conjugate fiber comprising an island component composed of a fiber-forming thermoplastic polymer and having an island diameter (D) of 100 to 1,000 nm and a sea component composed of a polymer (hereinafter also referred to as an "easily soluble polymers") which is more easily soluble in an alkaline aqueous solution than the above-mentioned fiber-forming thermoplastic polymer, followed by subjection to alkali reduction processing, and dissolving and removing the above-mentioned sea component. Incidentally, the above-mentioned island diameter can be measured by taking a photograph of a cross-section of the fiber using a transmission type electron microscope. In addition, when the island has a noncircular cross-section shape other than a circular cross-section shape, the diameter of a circumscribed circle thereof is used as the above-mentioned island diameter (D).

Here, when the dissolution rate ratio of the polymer which is easily soluble in an alkaline aqueous solution and forms the sea component to the fiber-forming thermoplastic polymer which forms the island component is 200 or more and preferably from 300 to 3,000, island separability is improved. This is therefore preferred. When the dissolution rate ratio is less than 200 times, the separated island component in a surface layer portion of a fiber cross-section is dissolved because of the small fiber diameter, while the sea component in the center portion of the fiber cross-section is dissolved. Accordingly, the sea component in the center portion of the fiber cross-section cannot be completely dissolved and removed, despite the loss of the sea-corresponding weight, which leads to thickness unevenness of the island component or solvent erosion of the island component itself, and the ultrafine short fibers having a uniform fiber diameter might not be obtained.

Preferred examples of the easily soluble polymers which form the sea component include particularly polyesters, which have good fiber-forming properties, aliphatic polyamides and polyolefins such as polyethylene and polystyrene. Further specific examples of the polymers easily soluble in an alkaline aqueous solution optimally include polyester-based polymers such as polylactic acid, ultrahigh molecular weight polyalkylene oxide condensation polymers and copolymerized polyesters of polyalkylene glycol-based compounds and 5-sodium sulfoisophthalic acid. The alkaline aqueous solution used herein means an aqueous solution of potassium hydroxide, sodium hydroxide or the like. In addition to this, examples thereof include formic acid to aliphatic polyamides such as nylon 6 and nylon 66, trichloroethylene to polystyrene, hydrocarbon-based solvents such as hot toluene and xylene to polyethylene (particularly, high-pressure low-density polyethylene or linear low-density polyethylene) and hot water to polyvinyl alcohol or ethylene-modified vinyl alcohol-based polymers.

Of the polyester-based polymers, preferred is a polyethylene terephthalate-based copolymerized polyester having an intrinsic viscosity of 0.4 to 0.6, which is copolymerized with 6 to 12% by mole of 5-sodium sulfoisophthalic acid and 3 to 10% by weight of polyethylene glycol having a molecular weight of 4,000 to 12,000. Here, 5-sodium sulfoisophthalic acid contributes to hydrophilicity and improvement in melt viscosity, and polyethylene glycol (PEG) improves hydrophilicity. Further, PEG having a higher molecular weight has a more hydrophilicity-increasing action which is considered to be caused by its higher-order structure. However, reactivity thereof is deteriorated to form a blend system, so that problems might be raised with regard to heat resistance and spinning stability. Furthermore, when the copolymerized amount of PEG exceeds 10% by weight, it causes a melt viscosity-decreasing action. This is therefore unfavorable.

On the other hand, suitable examples of the slightly soluble polymers forming the island component include polyamides, polyesters, polyolefins and the like. Specifically, in use requiring mechanical strength or heat resistance, preferred as the polyesters are polyethylene terephthalate (hereinafter also referred to as "PET"), polytrimethylene terephthalate, polybutylene terephthalate, polyethylene naphthalate and copolymers having these as main repeating units, which are copolymerized with aromatic dicarboxylic acids such as isophthalic acid and metal salts of 5-sulfoisophthalic acid, aliphatic dicarboxylic acids such as adipic acid and sebacic acid, hydroxycarboxylic acid condensates such as ε-caprolactone, glycol components such as diethylene glycol, trimethylene glycol, tetramethylene glycol and hexamethylene glycol, or the like. Further, as the polyamides, preferred are aliphatic polyamides such as nylon 6 and nylon 66. On the other hand, the polyolefins are characterized by that they are hard to be attacked by acids or alkalis, that they can be used as a binder component after being taken out as the ultrafine fibers because of their relatively low melting point, and the like. Preferred examples thereof include high-density polyethylene, medium-density polyethylene, high-pressure low-density polyethylene, linear low-density polyethylene, isotactic polypropylene, ethylene-propylene copolymers, ethylene copolymers of vinyl monomers such as maleic anhydride, and the like.

Further, the island component may have not only a circular cross-section, but also a noncircular cross-section. In particular, aliaromatic polyesters such as polyethylene terephthalate, polytrimethylene terephthalate, polybutylene terephthalate, polyethylene terephthalate isophthalate having an isophthalic acid copolymerization ratio of 20% by mole or less and polyethylene naphthalate or aliphatic polyamides such as nylon 6 and nylon 66 can be preferably applied to use requiring heat resistance and strength, compared to ultrafine fibrillated fibers obtained from polyvinyl alcohol/polyacrylonitrile blend spinning fibers, because they have heat resistance due to their high melting point and mechanical characteristics.

Incidentally, the polymers forming the sea component and the polymers forming the island component may contain various additives such as organic fillers, antioxidants, heat stabilizers, light stabilizers, flame retardants, lubricants, antistatic agents, corrosion inhibitors, crosslinking agents, foaming agents, fluorescent agents, surface smoothing agents, surface gloss improvers and release improvers such as fluororesins, as needed, within the range not exerting influence on fiber-forming properties and physical properties of the ultrafine fibers after extraction.

In the above-mentioned sea-island type conjugate fiber, it is preferred that the melt viscosity of the sea component at the time of melt spinning is higher than the melt viscosity of the island component polymer. In the case where such a relationship is satisfied, even when the conjugate weight ratio of the sea component becomes as low as less than 40%, islands are less likely to stick together, or almost all of the islands are less likely to stick, resulting in easy formation of the sea-island type conjugate fiber.

The preferred melt viscosity ratio (sea/island) is within the range of 1.1 to 2.0, particularly 1.1 to 1.5. When this ratio is less than 1.1, the islands become liable to stick together at the time of melt spinning. On the other hand, in the case of exceeding 2.0, the spinning behavior tends to be deteriorated, because the difference in viscosity is too large.

Then, the number of islands is preferably 100 or more (more preferably, from 300 to 1,000). Further, the sea-island conjugate weight ratio (sea: island) thereof is preferably within the range of 5:95 to 95:5. Within such a range, the thickness of the sea component between the islands can be decreased to make it easy to dissolve and remove the sea component, resulting in easy conversion of the islands to the ultrafine fibers. This is therefore preferred. Here, when the ratio of the sea component exceeds 95%, the thickness of the sea component becomes too thick. On the other hand, in the case of less than 5%, the amount of the sea component becomes too small, resulting in easy occurrence of sticking between the islands.

As a spinneret used for melt spinning, there can be used any one having a hollow pin group or a fine orifice group for forming the island components. For example, there may be used a spinning spinneret in which the island components extruded from the hollow pins or the fine orifices and a sea component flow extruded from a flow passage which is designed in such a form as to fill a gap therebetween are allowed to meet together, followed by compression thereof, thereby forming a sea-island cross-section. The sea-island type conjugate fiber extruded is solidified by a cooling air and taken up by a rotary roller or an ejector which is set to a predetermined take-up speed to obtain an undrawn yarn. Although not particularly limited, this take-up speed is desirably from 200 to 5, 000 m/min. Less than 200 m/min results in poor productivity, whereas exceeding 5,000 m/min results in poor spinning stability.

The undrawn yarn obtained may be subjected to a cut process or a subsequent extraction process as such depending on use and purpose of the ultrafine fibers obtained after extraction of the sea component, or in order to match intended strength, elongation and thermal shrinkage characteristics, can be subjected to the cut process or the subsequent extraction process through a drawing process or a heat treatment process. The drawing process may be a separate draw system in which spinning and drawing are performed in separate steps or a direct draw system in which drawing is performed immediately after spinning in one step.

Then, such a conjugate fiber is cut so that the ratio (L/D) of the length (L) to the single fiber diameter (D) is within the range of 100 to 2,500. Such cutting is preferably performed by cutting the undrawn or drawn yarn as such or a tow bundled by tens to millions of yarns, by a guillotine cutter, a rotary cutter or the like. Further, cutting may be performed in a process after the following extraction process (alkali reduction processing).

In the above-mentioned extraction process (alkali reduction processing), the ratio (bath ratio) of the fibers and the alkaline solution is preferably from 0.1 to 5%, and more preferably from 0.4 to 3%. When it is less than 0.1%, process properties such as water discharge might become difficult, although the fibers much come into contact with the alkaline solution. On the other hand, when it exceeds 5%, entanglement of the fibers might occur at the time of the alkali reduction processing, because the fiber amount is too large. Incidentally, the bath ratio is defined by the following equation:

$$\text{Bath ratio (\%)} = [\text{fiber weight (gr)/alkaline aqueous solution weight (gr)}] \times 100$$

Further, the processing time of the alkali reduction processing is preferably from 5 to 60 minutes, and more preferably from 10 to 30 minutes. When it is less than 5 minutes, the alkali reduction processing might become insufficient. On the other hand, when it exceeds 60 minutes, the island component might also be reduced in weight.

Incidentally, the processing temperature at the time of the alkali reduction processing is usually from 50 to 90°C, and preferably from about 60 to 80°C.

Further, alkalis used for the alkali reduction processing include sodium hydroxide and the like.

Further, in the alkali reduction processing, the alkali concentration is preferably from 2 to 10%. When it is less than 2%, the alkali is deficient to cause a possibility that the rate of caustic reduction is extremely reduced because of alkali deficiency. On the other hand, when it exceeds 10%, the caustic reduction excessively proceeds to cause a possibility that the island component is also reduced in weight.

Methods for caustic reduction include a method of putting a conjugate fiber cut (or not cut) in an alkaline solution, treating it under predetermined conditions for a predetermined period of time, thereafter, putting it in water again, once through a dehydration process, allowing neutralization and dilution to proceed using an organic acid such as acetic acid or oxalic acid, and finally performing dehydration, or a method of previously performing the neutralization treatment after the treatment for a predetermined period of time, further pouring water to allow the dilution to proceed, and thereafter performing the dehydration. In the former, production (processing) in small quantities can be performed because of batch type treatment. On the other hand, the neutralization treatment requires time, so that productivity is somewhat low. In the latter, semicontinuous production is possible, but there are disadvantages that the acid aqueous solution is required in large amounts at the time of the neutralization treatment and that water is required in large amounts for the dilution.

A treatment equipment is not limited in any way. However, from the viewpoint of preventing fiber dropout at the time of the dehydration, a mesh-like material (for example, an alkali non-hydrolyzable bag or the like) having an aperture ratio (which means the area of opening portions per unit area) of 10 to 50% as disclosed in Japanese Patent No. 3678511 is preferably applied. When the above-mentioned aperture ratio is less than 10%, the passing through of water is extremely slow. On the other hand, when it exceeds 50%, fiber dropout might occur.

Furthermore, in order to increase dispersibility, after the alkali reduction processing, a dispersing agent (forexample, type YM-81 manufactured by Takamatsu Oil & Fat Co., Ltd.) is preferably allowed to adhere onto fiber surfaces in an amount of 0.1 to 5.0% by weight based on the fiber weight.

In the above-mentioned wet type nonwoven fabric layer A, the ratio of the short-cut nanofibers in the wet type noun-woven fabric layer A is from 0 a 5 to 20% by weight, preferably from 2 to 20% by weight, and more preferably from 3 to 10% by weight. When it is less than 0.5% by weight, not only satisfactory collection efficiency cannot be obtained, but also texture unevenness as the nonwoven fabric might occur. This is therefore unfavorable. On the other hand, when it exceeds 20% by weight, the nonwoven fabric becomes too dense, so that water filtering properties in a papermaking process is extremely deteriorated to cause a reduction in productivity or an excessive increase in pressure loss. This is therefore unfavorable.

Core-Sheath Conjugate Type Binder Fibers:

In the wet type nonwoven fabric layer A used in the present invention, the structure thereof is maintained by adhesion of the core-sheath composition type binder fibers having a single fiber diameter of 5 $\mu$m or more, preferably 5 to 20 $\mu$m and more preferably 7 to 15 $\mu$m. Here, when the single fiber diameter of the core-sheath composition type binder fibers is less than 5 $\mu$m, rigidity of the fibers themselves is unfavorably decreased to make it difficult to maintain the structure of the wet type nonwoven fabric layer A. On the other hand, when it exceeds 20 $\mu$m, the number of constituent binder fibers in the wet type nonwoven fabric is decreased to decrease their adhesion points, which might cause a decrease in rigidity.

Further, the core-sheath composition type binder fibers are preferably cut to a fiber length of 3 to 100 mm.

As such core-sheath conjugate type binder fibers, it is preferred that a polymer having a melting point at least 40°C lower than that of the polymer which forms the abode-mentioned short-cut nanofibers is arranged on surfaces thereof as a thermal adhesive component.

The polymers arranged as the thermal adhesive component herein include polyurethane-based elastomers, polyester-based elastomers, non-elastic polyester-based polymers and copolymers thereof, polyolefin-based polymers and copolymers thereof, polyvinyl alcohol-based polymers and the like.

Of these, the polyurethane-based elastomers are polymers obtained by reaction of low-melting polyols having a molecular weight of about 500 to 6,000, such as dihydroxy polyethers, dihydroxy polyesters, dihydroxy polycarbonates and dihydroxy polyesteramides, organic diisocyanates having a molecular weight of 500 or less, such as p, p'-diphenylmethane diisocyanate, tolylene diisocyanate, isophorone diisocyanate, hydrogenated diphenylmethane diisocyanate, xylylene diisocyanate, 2,6-diisocyanate methyl caproate and hexamethylene diisocyanate, and chain extenders having a molecular weight of 500 or less, such as glycols, aminoalcohols and triols.

Of these polymers, particularly preferred is a polyurethane using polytetramethylene glycol as the polyol, or poly-$\varepsilon$-caprolactam or polybutylene adipate. The organic diisocyanates in this case include p,p'-bishydroxyethoxy-benzene and 1,4-butanediol.

Further, the polyester-based elastomers include polyetherester copolymers obtained by copolymerizing thermoplastic polyesters as hard segments and poly(alkylene oxide) glycols as soft segments, more specifically, terpolymers composed of at least one dicarboxylic acid selected from alicyclic dicarboxylic acids such as terephthalic acid, isophthalic acid, naphthalene-2,6-dicarboxylic acid, naph-thalene-2,7-dicarboxylic acid, diphenyl-4,4'-dicarboxylic acid and 1,4-cyclohexanedicarboxylic acid, aliphatic dicarboxylic acids such as succinic acid, oxalic acid, adipic acid, sebacic acid, dodecanedioic acid and dimer acid, or ester-forming derivatives thereof; at least one of diol components selected from aliphatic diols such as 1,4-butanediol, ethylene glycol, trimethylene glycol, tetramethylene glycol, pentamethylene glycol, hexamethylene glycol, neopentyl glycol and decamethylene glycol, alicyclic diols such as 1,1-cyclohexanedimethanol, 1,4-cyclohexanedimethanol and tricyclo-decanedimethanol, ester-forming derivatives thereof or the like; and at least one of poly(alkylene oxide) glycols having an average molecular weight of about 400 to 5,000, such as poly(ethylene glycol), poly(1,2- and 1,3-propylene oxide) glycol, poly(tetramethylene oxide) glycol, a copolymer of ethylene oxide and propylene oxide and a copolymer of ethylene oxide and tetrahydrofuran.

In particular, in view of adhesiveness, thermal characteristics and strength, preferred is a block co-polymerized polyetherester obtained by using polybutylene-based terephthalate as a hard segment and poly-oxybutylene glycol as a soft segment. In this case, the polyester portion constituting the hard segment is a polybutylene terephthalate in which a main acid component is terephthalic acid, and a main diol component is a butylene glycol component. Of course, part of the acid component (usually, 30% by mole or less) maybe replaced with another dicarboxylic acid component or another oxycarboxylic acid component. Similarly, part of the glycol component (usually, 30% by mole or less) may be replaced with a dioxy component other than the butylene glycol component. Further, the polyether portion constituting the soft segment may also be a polyether replaced with a dioxy component other than butylene glycol.

The copolymerized polyester-based polymers include copolymerized esters containing aliphatic dicarboxylic acids such as adipic acid and sebacic acid, aromatic dicarboxylic acids such as phthalic acid, isophthalic acid and naphthalenedicarboxylic acid and/or alicyclic dicarboxylic acids such as hexahydroterephthalic acid and hexahydroisophthalic acid, and aliphatic or alicyclic diols such as diethylene glycol, polyethylene glycol, propylene glycol and paraxylene glycol, in the predetermined numbers, to which oxy acids such as parahydroxybenzoicacid are added as needed. For example, there can be used a polyester in which isophthalic acid and 1, 6-hexandiol are added to and copolymerized with terephthalic acid and ethylene glycol.

Further, the polyolefin-based polymers include, for example, low-density polyethylene, high-density polyethylene, polypropylene and further, modified products thereof.

In particular, as the core-sheath conjugate type binder fibers, it is more preferred that a polyester is arranged as a core and that a low-melting polyester is arranged as a sheath, from the viewpoints of adhesiveness to the short-cut nanofibers and processing properties (such as dispersibility) in the papermaking process.

Incidentally, various stabilizers, UV-absorbers, thickening branching agents, delusterants, colorants and other various improvers maybe blended in the above-mentioned polymers as needed.

In the core-sheath conjugate type binder fibers, it is more preferred that the polyester is arranged as the core and that the low-melting polyester is arranged as the sheath, from the viewpoints of adhesiveness to the short-cut nanofibers and processing properties (such as dispersibility) in the papermaking process, as described above. Here, the thermal adhesive component preferably occupies at least a half of the surface area. The weight ratio of the thermal adhesive component and the other side component is suitably within the range of 10/90 to 70/30 in the conjugate ratio (weight ratio). The morphology of the core-sheath conjugate type binder fibers is a core-sheath type. In this core-sheath type core-sheath conjugate type binder fiber, the thermal adhesive component forms the sheath portion, and the other side component forms the core portion. This core portion may be arranged either concentrically or eccentrically.

Other Fibers:

Incidentally, in the wet type nonwoven fabric layer A, various synthetic fibers (polyethylene terephthalate, polytrimethylene terephthalate, nylon, olefinic series and aramid series), natural pulp such as wood pulp or linter pulp, synthetic pulp mainly composed of aramid or polyethylene, and the like can be used as the other fibers other than the above-mentioned short-cut nanofibers and binder fibers. In particular, drawn polyethylene terephthalate short fibers composed of polyethylene terephthalate and having a single fiber diameter of 2 to 30 $\mu$m and a fiber length of 3 to 10 $\mu$m are preferred from the viewpoint of dimensional stability and the like.
The ratio of the above-mentioned other fibers is 80% by weight or less, and more preferably about 60 to 80% by weight, in the wet type nonwoven fabric layer A.

When the multilayer filter medium for use in a filter of the present invention is used as a filter, the abode-mentioned wet type nonwoven fabric layer A is preferably disposed on a fluid outflow side (clean side). When the above-mentioned wet type nonwoven fabric layer A is disposed on the fluid outflow side (clean side), it plays a role in collecting fine dusts. Accordingly, the above-mentioned wet type nonwoven fabric layer A becomes the densest structure in the entire filter medium. However, when it is excessively dense to become too low in air permeation, it becomes difficult to achieve low pressure loss, a high lifetime and the like. It is therefore important to form a structure which secures a certain air permeability. Such an air permeability is preferably 10 cc/cm$^2$/s or more, and more preferably 20 cc/cm$^2$/s or more. Incidentally, the basis weight of the wet type nonwoven fabric layer A is usually from 30 to 150 g/m$^2$, preferably from 50 to 120 g/m$^2$, and particularly preferably from about 80 to 100 g/m$^2$.

Method for Producing Wet Type Nonwoven Fabric Layer A:

Then, as a method for producing the wet type nonwoven fabric layer A of the present invention, preferred is a production method in which papermaking is performed with an ordinary fourdrinier machine, short net papermaking machine or cylinder paper machine, or as multiplayer papermaking combining a plurality of these machines, followed by heat treatment. In that case, as the heat treatment process, either a Yankee dryer or an air-through dryer may be used after the papermaking process. Further, calendaring or embossing may be performed as needed.

<Nonwoven Fabric Layer B>

In the present invention, it is of vital importance that the density of the nonwoven fabric layer B is lower than that of the above-mentioned wet type nonwoven fabric layer A. In particular, it is preferred that the ratio (MB/MA) of the density (MB) of the nonwoven fabric layer B and the density (MA) of the wet type nonwoven fabric layer A is within the range of 0.1 to 0.8. More preferably, it is from 0.1 to 0.6, and particularly preferably from 0.12 to 0.5.

When the multilayer filter medium for use in a filter of the present invention is used as a filter, the nonwoven fabric layer B is preferably disposed on a fluid inflow side (dust side). The nonwoven fabric layer B is disposed on the fluid inflow side (dust side), whereby it plays a role in collecting relatively large dusts. In the case where the ratio (MB/MA) exceeds 0.8, for example, when the density of the nonwoven fabric layer B is equal to or higher than that of the above-mentioned wet type nonwoven fabric layer A, the nonwoven fabric layer B collects not only the relatively large dusts, but also small dusts. Accordingly, the dusts are deposited on a surface thereof to cause clogging, resulting in not only a failure to effectively utilize the wet type nonwoven fabric layer A, but also a decrease in lifetime as the filter. This is therefore unfavorable. On the other hand, when the ratio (MB/MA) is less than 0.1, the dusts are scarcely collected by the nonwoven fabric layer B to pass through it. Accordingly, a burden on the wet type nonwoven fabric layer A is increased to unfavorably cause a decrease in dust retaining amount (lifetime).

Further, the nonwoven fabric layer B is more preferably a dry type nonwoven fabric, when the balance of density, basic strength and the like is considered. As a method for producing the above-mentioned nonwoven fabric layer B, there is applicable needle punching, water needling, thermal bonding or point bonding, in which the nonwoven fabric is produced through an ordinary carding process, or an airlaid process in which the short-cut fibers are opened in the air to obtain a web. When the texture, density or the like of the nonwoven fabric is considered, the airlaid process is more preferred. This nonwoven fabric layer B is not only a single layer, but also may be a multilayer (different in configuration, or the like) obtained by lamination of layers produced by the same production method or by different production methods, without any problem. Further, the nonwoven fabric layer B has no problem even when produced by a production method other than that of the dry type nonwoven fabric.

There is no particular limitation on the fibers used in the nonwoven fabric layer B, but in order to obtain rigidity as the filter, it is preferred that the binder fibers are contained in an amount of at least 30% by weight, and it is more preferred that the binder fibers are the core-sheath type binder fibers as described above.

That is to say, of the binder fibers used in such a nonwoven fabric layer B, the core-sheath type binder fibers have a single fiber diameter of 5 $\mu$m or more, preferably 5 to 20 $\mu$m and more preferably 7 to 15 $\mu$m, and are preferably cut to a fiber length of 3 to 100 mm.

The other constitutions and functions of the core-sheath type binder fibers are the same as those of the core-sheath type binder fibers used in the nonwoven fabric layer A, so that explanation thereof is omitted.

Incidentally, when the nonwoven fabric layer B is produced by the airlaid process, it is preferred that the fibers have a fiber length of 10 mm or less.

Further, the above-mentioned nonwoven fabric layer B preferably has a high air permeability, and the air permeability thereof is preferably 50 cc/cm$^2$/s or more, and further, more preferably 100 cc/cm$^2$/s or more.

Incidentally, the basis weight of the nonwoven fabric layer B is usually from 20 to 100 g/m$^2$, preferably from 30 to 80 g/m$^2$, and particularly preferably from about 40 to 60 g/m$^2$.

<Multilayer Filter Medium for Use in Filter>

In the multilayer filter medium for use in a filter of the present invention, the weight ratio of the wet type nonwoven fabric layer A and the nonwoven fabric layer B is preferably within the range of 90/10 to 10/90. Further, it is preferred that the nonwoven fabric layer B is composed of two or more layers.

A method for integrating the wet type nonwoven fabric layer A with the nonwoven fabric layer B is not particularly limited. Both nonwoven fabric layers have the binder fibers, so that it is not necessarily essential to require a new binder resin at an interface between both nonwoven fabric layers, and it becomes possible to perform integration by passing through an air-through dryer or a process such as embossing or point bonding.

Specific examples of the methods for integrating the wet type nonwoven fabric layer A with the nonwoven fabric layer B include a method of performing integration by laminating the wet type nonwoven fabric layer A and the nonwoven fabric layer B in a hot-air suction type drying furnace elevated to a temperature of 140 to 160°C, and setting a clearance in such a manner that compression is performed by 5% based on the thickness in a laminated state.

Incidentally, in the above-mentioned multilayer filter medium for use in a filter, an attachment other than the above-mentioned wet type nonwoven fabric layer A and nonwoven fabric layer B, for example, a sheet-like structure such as a woven fabric or a nonwoven fabric having a coarse structure (air permeability: 100 cc/cm$^2$/s or more), which does not exert an influence on filter performance, may be laminated thereon to improve rigidity. Further, also the shape of the multilayer filter medium for use in a filter is not limited to a tabular form, and may be any shape. Furthermore, known functional processing such as ordinary water repellent finish, fire proofing, flame retarding, dying and minus ion generation processing may be added.

<Filter>

Then, the filter of the present invention is a filter which is obtained using the above-mentioned multilayer filter medium for use in a filter and in which the nonwoven fabric layer B is disposed on a fluid inflow side. In such a filter, relatively large dusts are collected by the nonwoven fabric layer B disposed on the fluid inflow side (dust side), and fine dusts are collected by the wet type nonwoven fabric layer A disposed on the fluid outflow side (clean side). As a result, high collection efficiency, low pressure loss and a long filter lifetime are obtained.

The filter of the present invention has high collection efficiency, low pressure loss and a long filter lifetime, so that it can be suitably used as an air filter for an internal combustion engine such as an intake air filter for an internal combustion engine. However, it may also be used as a filter for other use.

The total basis weight of such a filter is usually form 60 to 200 $g/m^2$, preferably from 80 to 180 $g/m^2$, and particularly preferably from about 100 to 150 $g/m^2$.

Further, the air permeability of the filter obtained by combining the nonwoven fabric layer B and the wet type nonwoven fabric layer A is usually from 20 to 150 $cc/cm^2/s$ and preferably from about 50 to 80 $cc/cm^2/s$.

[Examples]

Examples and comparative examples of the present invention will be described in detail below, but the present invention should not be construed as being limited thereby. Incidentally, respective measurement items in examples were measured by the following methods.

(1) Melt Viscosity

A polymer after drying treatment was set to an orifice whose temperature had been set to the melting temperature of an extruder at the time of spinning, melted and held for 5 minutes, and then, extruded by applying several levels of load. The shear rate and the melt viscosity at that time were plotted. The plotted points were smoothly connected to prepare a shear rate-melt viscosity curve, and the melt viscosity at the time when the shear rate was 1,000 $sec^{-1}$ was measured.

(2) Measurement of Island Diameter

A fiber cross-sectional photograph was taken at x30, 000 magnification under a transmission type electron microscope TEM, and measurement was performed. The measurement was performed utilizing the length measurement capabilities possessed by the TEM.

Further, in the absence of the TEM, the photograph taken may be enlarged with a copier and measured with a ruler in view of a reduction scale. However, an average value (n=20) of major axes and minor axes in fiber cross-sections was used as the fiber diameter.

(3) Fiber Length

In a state where an ultrafine short fiber before dissolution and removal of a sea component was laid on a base plate, the fiber length thereof was measured at x20 to x500 magnification under a scanning electro microscope (SEM). The measurement was performed utilizing the length measurement function of the STEM.

(4) Basis Weight

Measurement was performed on the basis of JIS P8124 (Measuring Method of Basis Weight in GSM of Paper).

(5) Thickness

Measurement was performed on the basis of JIS P8118 (Testing Method of Thickness and Density of Paper and Paper Board).

(6) Density

Measurement was performed on the basis of JIS P8118 (Testing Method of Thickness and Density of Paper and Paper Aboard).

(7) Collection Efficiency

When the flow rate at the time of sample passing was 16.7 cm/sec and the dust concentration was 1 $g/m^3$, using ISO FINE dust, the transmittance of the dust before and after the sample passing through was taken as the collection efficiency.

(8) Pressure Loss

The pressure loss was determined at the time of performing the above-mentioned collection efficiency (flow rate: 16.7 cm/sec).

(9) Filter Lifetime (DHC)

The above-mentioned collection efficiency test was performed, and the dust retaining amount (weight increase) at the time when an increase in pressure loss reached 2 kPa was taken as the DHC.

(10) Air Permeability

Measurement was performed on the on the basis of JIS L1096 (Testing Method of General Woven Fabric).

[Example 1]

Using polyethylene terephthalate having a melt viscosity of 120 Pa·sec at 285°C as an island component and modified polyethylene terephthalate having a melt viscosity of 135 Pa·sec at 285°C, which was obtained by copolymerizing 4% by weight of polyethylene glycol having an average molecular weight of 4,000 and 9% by mole of 5-sodium sulfoisophthalic acid, as a sea component, spinning was performed at a weight ratio of sea:island = 10:90 using a spinneret having an island number of 400, and taken up at a spinning speed of 1,500 m/min. The difference in alkali reduction rate was 1, 000 times. This was drawn to 3.9 times, and cut to 1, 000 $\mu$m with a guillotine cutter to obtain an ultrafine short fiber precursor. This was subjected to alkali reduction with a 4% NaOH aqueous solution at 75°C to reduce the weight by 10%. As a result, it was confirmed that ultrafine short fibers having a relatively uniform fiber diameter and fiber length were formed. The resulting fibers were used as short-cut nanofibers (750 nm, 0.8mm, L/D=1,067).

On the other hand, core-sheath conjugate type binder short fibers (fineness: 1.1 dtex, single fiber diameter: 10 $\mu$m, fiber length: 5 mm, no crimp, core/sheath = 50/50, core: polyethylene terephthalate having a melting point of 256°C, sheath: copolymerized polyester having a softening point of 1100C, which was mainly composed of terephthalic acid, isophthalic acid, ethylene glycol and diethylene glycol) as binder fibers, and, in addition thereto, polyethylene terephthalate short fibers (fineness: 1.7 dtex, single fiber diameter: 12 $\mu$m, fiber length: 5 mm, no crimp) were mixed with the short-cut nanofibers at a predetermined weight ratio (short-cut nanofibers/binder fibers/other fibers = 5/50/45), followed by stirring. The resulting mixture was subjected to papermaking to 91g/m$^2$ by TAPPI (a square type sheet machine manufactured by Kumagai Riki Kogyo Co., Ltd., hereinafter the same), followed by drying with a Yankee dryer (120°C $\times$ 2 minutes) to obtain a sheet (wet type nonwoven fabric layer A). Incidentally, this wet type nonwoven fabric layer A had an air permeability of 81 cc/cm$^2$/s.

On the other hand, as a nonwoven fabric layer B, using core-sheath conjugate type binder short fibers (fineness: 1.7 dtex, single fiber diameter: 12 $\mu$m, fiber length: 5 mm, crimped, core/sheath = 50/50, core: polyethylene terephthalate having a melting point of 256°C, sheath: copolymerized polyester having a softening point of 110°C, which was mainly composed of terephthalic acid, isophthalic acid, ethylene glycol and diethylene glycol), a web having a basis weight of 39 g/m$^2$ was formed with an airlaid test production apparatus (Japanese Patent No. 3880456), and then, heat treated at 140°C $\times$ 5 min with a hot-air suction type dryer to obtain an airlaid nonwoven fabric sheet (nonwoven fabric layer B). Incidentally, this nonwoven fabric layer B had an air permeability of 210 cc/cm$^2$/s.

Both were laminated on each other, and re-heat treated at 150°C, thereby remelting the core-sheath conjugate type binder short fibers contained in the respective layers to obtain an integrated sheet. At the time of measuring the filter performance, evaluation of the basic performance was performed with the low-density layer (nonwoven fabric layer B) disposed on a fluid inflow side (dust side). The results thereof are described in Table 1.

[Example 2]

A sheet was prepared in the same manner as in Example 1 with the exception that the respective basis weights of the wet type nonwoven fabric layer A and the nonwoven fabric layer B were changed (wet type nonwoven fabric layer A: from 91 to 51, nonwoven fabric layer B: from 39 to 81). The results of performance evaluation of the sheet are described in Table 1. Incidentally, this wet type nonwoven fabric layer A had an air permeability of 230 cc/cm$^2$/s, and the nonwoven fabric layer B had an air permeability of 131 cc/cm$^2$/s.

[Example 3]

A sheet was prepared in the same manner as in Example 1 with the exception that the mixing ratio in the wet type nonwoven fabric layer A was changed to short-cut nanofibers/binder fibers/other fibers = 15/50/35. The results of performance evaluation of the sheet are described in Table 1. Incidentally, this wet type nonwoven fabric layer A had an air permeability of 61 cc/cm$^2$/s.

[Example 4]

A sheet was prepared in the same manner as in Example 1 with the exception that the mixing weight ratio in the wet type nonwoven fabric layer A was changed to short-cut nanofibers/binder fibers/other fibers = 1/50/49. The results of performance evaluation of the sheet are described in Table 1. Incidentally, this wet type nonwoven fabric layer A had an air permeability of 209 cc/cm$^2$/s.

[Comparative Example 1]

A sheet was prepared in the same manner as in Example 1 with the exception that the mixing weight ratio in the wet type nonwoven fabric layer A was changed to short-cut nanofibers/binder fibers/other fibers = 25/50/25. The results of performance evaluation of the sheet are described in Table 2. Incidentally, this wet type nonwoven fabric layer A had an air permeability of 9 cc/cm$^2$/s.

[Comparative Example 2]

A sheet was prepared in the same manner as in Example 1 with the exception that the mixing weight ratio in the wet type nonwoven fabric layer A was changed to short-cut nanofibers/binder fibers/other fibers = 0.1/50/49.9. The results of performance evaluation of the sheet are described in Table 2. Incidentally, this wet type nonwoven fabric layer A had an air permeability of 241 cc/cm$^2$/s.

[Comparative Example 3]

The wet type nonwoven fabric layer A formed in Example 1 was singly used to obtain a nonwoven fabric sheet increased in basis weight (from 91 to 141). The results of performance evaluation of the sheet are described in Table 2. Incidentally, this wet type nonwoven fabric layer A had an air permeability of 53 cc/cm$^2$/s.

[Table 1]

Table 1 (Filter Medium for Use in Filter)

| | | Fiber Diameter × Fiber Length | Unit | Example 1 | Example 2 | Example 3 | Example 4 |
|---|---|---|---|---|---|---|---|
| Nonwoven Fabric Layer A | Short-Cut Nano-fibers | 750 nm × 0.8 mm L/D 1067 | wt% | 5 | 5 | 15 | 1 |
| | Core-Sheath Conjugate Type Binder Fibers | 1.1 dtex × 5 mm | wt% | 50 | 50 | 50 | 50 |
| | Other Fibers | 1.7 dtex × 5 mm | wt% | 45 | 45 | 35 | 49 |
| | Properties | Basis Weight | g/m² | 91 | 51 | 89 | 91 |
| | | Thickness | mm | 0.45 | 0.23 | 0.37 | 0.55 |
| | | Density | g/cm² | 0.202 | 0.222 | 0.241 | 0.165 |
| Nonwoven Fabric Layer B | Core-Sheath Conjugate Type Binder Fibers | 1.7 dtex × 5 mm | wt% | 100 | 100 | 100 | 100 |
| | Properties | Basis Weight | g/m² | 39 | 81 | 42 | 41 |
| | | Thickness | mm | 1.5 | 2.6 | 1.5 | 1.5 |
| | | Density | g/cm³ | 0.026 | 0.031 | 0.028 | 0.027 |
| Composite | Properties | Basis Weight | g/m³ | 130 | 132 | 131 | 132 |
| | | Thickness | mm | 1.95 | 2.83 | 1.87 | 2.05 |
| | | Density | g/cm³ | 0.067 | 0.047 | 0.070 | 0.064 |
| | | Nonwoven Fabric Layer A/Nonwoven Fabric Layer B | | 2.3 | 0.6 | 2.1 | 2.2 |
| | | Density of Nonwoven Fabric B (MB) / Density of Nonwoven Fabric A (MA) | | 0.13 | 0.14 | 0.12 | 0.17 |
| | Filter Performance | Collection Efficiency | | 99.98 | 99.83 | 99.99 | 99.78 |
| | | Pressure Loss | Pa | 638 | 487 | 762 | 614 |
| | | DHC | g/m² | 362 | 452 | 261 | 451 |

(continued)

| | Fiber Diameter × Fiber Length | Unit | Example 1 | Example 2 | Example 3 | Example 4 |
|---|---|---|---|---|---|---|
| Remarks | | | *1 | *2 | *3 | *4 |

*1 The filter lifetime (DHC) became a relatively large value, because a balance of the collection efficiency and the pressure loss was good. *Standard constitution *2 The ratio of the nonwoven fabric layers A/B was changed, so that the efficiency was somewhat decreased. However, voids were increased, resulting in a decrease in pressure loss and an increase in DHC.

*3 The nano-fibers ratio became high, resulting in an increase in efficiency and an increase in pressure loss.

*4 The efficiency was somewhat decreased, because the nano-fibers ratio was decreased, however, resulting in a decrease in pressure loss and an increase in DHC.

[Table 2]

Table 2 (Filter Medium for Use in Filter)

| | | Fiber Diameter × Fiber Length | Unit | Com. Example 1 | Com. Example 2 | Com. Example 3 |
|---|---|---|---|---|---|---|
| Nonwoven Fabric Layer A | Short-Cut Nanofibers | 750 nm × 0.8 mm L/D 1067 | wt% | 25 | 0.1 | 5 |
| | Core-Sheath Conjugate Type Binder Fibers | 1.1 dtex × 5 mm | wt% | 50 | 50 | 50 |
| | Other Fibers | 1.7 dtex × 5 mm | wt% | 25 | 49.9 | 45 |
| | Properties | Basis Weight | g/m$^2$ | 92 | 91 | 141 |
| | | Thickness | mm | 0.32 | 0.54 | 0.69 |
| | | Density | g/cm$^3$ | 0.288 | 0.169 | 0.204 |
| Non-woven Fabric Layer B | Core-Sheath ConjugateType Binder Fibers | 1.7 dtex × 5 mm | wt% | 100 | 100 | - |
| | Properties | Basis Weight | g/m$^2$ | 41 | 42 | - |
| | | Thickness | mm | 1.5 | 1.5 | - |
| | | Density | g/cm$^3$ | 0.027 | 0.028 | - |

(continued)

| | | Fiber Diameter × Fiber Length | Unit | Com. Example 1 | Com. Example 2 | Com. Example 3 |
|---|---|---|---|---|---|---|
| Composite | Properties | Basis Weight | g/m$^2$ | 133 | 133 | 141 |
| | | Thickness | mm | 1.82 | 2.04 | 0.69 |
| | | Density | g/cm$^3$ | 0.073 | 0.065 | 0.204 |
| | | Nonwoven Fabric Layer A/Nonwoven Fabric Layer B | | 2.2 | 2.2 | - |
| | | Density of Nonwoven Fabric B (MB) / Density of Nonwoven Fabric A (MA) | | 0.10 | 0.17 | - |
| | Filter Performance | Collection Efficiency | % | 99.99 | 93.1 | 99.98 |
| | | Pressure Loss | Pa | 876 | 563 | 752 |
| | | DHC | g/m$^2$ | 87 | 96 | 85 |
| Remarks | | | | *5 | *6 | *7 |

*5 The efficiency was increased by substantially increasing the nano-fibers ratio. However, the pressure loss was substantially increased, and the DHC was also decreased, resulting in observation of a decrease in lifetime.
*6 The pressure loss was decreased by decreasing the nano-fibers ratio. However, fine particles could not be collected to decrease the efficiency. Further, for the DHC, an insufficient result was obtained.
*7 The collection efficiency showed a certain performance by means of the nonwoven fabric layer A. However, the DHC was substantially decreased by removing a dust retaining layer, resulting in an extremely short lifetime.

[Industrial Applicability]

According to the present invention, there are provided a multilayer filter medium for use in a filter, which makes it possible to obtain a filter having high collection efficiency, low pressure loss and a long filter lifetime, and a filter using the multilayer filter medium for use in a filter. The filter is also useful as a filter for an indoor air conditioner, a cooler, a heater (electric or oil-fired), an automotive air conditioner, an air cleaner, a clean room, an indoor humidifier or the like, as well as an air filter for an internal combustion engine such as an intake air filter for an internal combustion engine. Thus, the industrial value thereof is extremely large.

**Claims**

1. A multilayer filter medium for use in a filter, which is used as a constituent member of a filter and has a multilayer structure, comprising
   a wet type nonwoven fabric layer A containing 0.5 to 20% by weight, based on layer weight, of short-cut nanofibers which are composed of a fiber-forming thermoplastic polymer, have a single fiber diameter (D) of 100 to 1,000 nm, and are cut so that the ratio (L/D) of the length (L) to the single fiber diameter (D) is within the range of 100 to 2,500 and core-sheath conjugate type binder fibers having a single fiber diameter of 5 μm or more, and
   a nonwoven fabric layer B having a lower density than that of the wet type nonwoven fabric layer A.

**2.** The multilayer filter medium for use in a filter according to claim 1, wherein the short-cut nanofibers are ones obtained by dissolving and removing a sea component from a conjugate fiber comprising an island component composed of a fiber-forming thermoplastic polymer and having an island diameter (D) of 100 to 1, 000 nm, and a sea component composed of a polymer more easily soluble in an alkaline aqueous solution than the fiber-forming thermoplastic polymer.

**3.** The multilayer filter medium for use in a filter according to claim 2, wherein the sea component in the conjugate fiber is polyethylene terephthalate copolymerized with 6 to 12% by mole of 5-sodium sulfonic acid and 3 to 10% by weight of polyethylene glycol having a molecular weight of 4,000 to 12,000.

**4.** The multilayer filter medium for use in a filter according to claim 2, wherein the island component in the conjugate fiber is a polyester.

**5.** The multilayer filter medium for use in a filter according to claim 2, wherein the number of islands in the above-mentioned conjugate fiber is 100 or more.

**6.** The multilayer filter medium for use in a filter according to claim 1, wherein the nonwoven fabric layer B comprises an air-laidnonwoven fabric composed of fibers having a fiber length of 10 mm or less.

**7.** The multilayer filter medium for use in a filter according to claim 1, wherein the nonwoven fabric layer B contains at least 30% by weight or more of binder fibers.

**8.** The multilayer filter medium for use in a filter according to claim 1, wherein the ratio MB/MA of the density (B) of the nonwoven fabric layer B and the density (MA) of the wet type nonwoven fabric layer A is within the range of 0.1 to 0.8.

**9.** The multilayer filter medium for use in a filter according to claim 1, wherein the weight ratio of the wet type nonwoven fabric layer A and the nonwoven fabric layer B is within the range of 90/10 to 10/90.

**10.** The multilayer filter medium for use in a filter according to claim 1, wherein the nonwoven fabric layer B is composed of two or more layers.

**11.** A filter using the multilayer filter medium for use in a filter according to any one of claims 1 to 10 and having the nonwoven fabric layer B arranged on a fluid inlet side.

**12.** The filter according to claim 11, wherein the filter is an air filter for an internal combustion engine.

<table>
<tr><td colspan="2">**INTERNATIONAL SEARCH REPORT**</td><td colspan="2">International application No.<br>PCT/JP2011/074770</td></tr>
</table>

A.  CLASSIFICATION OF SUBJECT MATTER
*B01D39/16*(2006.01)i, *D04H1/559*(2012.01)i, *F02M35/024*(2006.01)i

According to International Patent Classification (IPC) or to both national classification and IPC

B.  FIELDS SEARCHED

Minimum documentation searched (classification system followed by classification symbols)
B01D39/16, D04H1/559, F02M35/024

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | WO 2008/130019 A1  (Teijin Fibers Ltd.),<br>30 October 2008 (30.10.2008),<br>claims; Best Mode for carrying out the<br>Invention<br>& US 2010/0133173 A1    & EP 2138634 A1<br>& CN 101680185 A        & KR 10-2010-0016585 A | 1-12 |
| Y | JP 11-226329 A  (Oji Paper Co., Ltd.),<br>24 August 1999 (24.08.1999),<br>paragraph [0005]<br>(Family: none) | 1-12 |
| A | JP 2010-70870 A  (Teijin Fibers Ltd.),<br>02 April 2010 (02.04.2010),<br>entire text<br>(Family: none) | 1-12 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
02 February, 2012 (02.02.12)

Date of mailing of the international search report
14 February, 2012 (14.02.12)

Name and mailing address of the ISA/
Japanese Patent Office

Authorized officer

Facsimile No.

Telephone No.

Form PCT/ISA/210 (second sheet) (July 2009)

**EP 2 633 892 A1**

**INTERNATIONAL SEARCH REPORT**

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-148748 A (Toray Industries, Inc.), 09 July 2009 (09.07.2009), entire text (Family: none) | 1-12 |
| A | JP 2005-264420 A (Toray Industries, Inc.), 29 September 2005 (29.09.2005), entire text & US 2007/0196401 A1 & EP 1743975 A1 & WO 2005/080679 A1 & CA 2556071 A & KR 10-2006-0123523 A & CN 1922363 A | 1-12 |
| A | JP 2009-299222 A (Teijin Fibers Ltd.), 24 December 2009 (24.12.2009), entire text (Family: none) | 1-12 |
| A | JP 2005-299069 A (Toray Industries, Inc.), 27 October 2005 (27.10.2005), entire text (Family: none) | 1-12 |
| A | JP 2007-107160 A (Teijin Fibers Ltd.), 26 April 2007 (26.04.2007), entire text (Family: none) | 1-12 |
| A | WO 2008/130020 A1 (Teijin Fibers Ltd.), 30 October 2008 (30.10.2008), entire text & US 2010/0136312 A1 & EP 2138633 A1 & CN 101680184 A & KR 10-2010-0019449 A | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004301121 A
- JP 2006289209 A
- JP 2007170224 A
- JP 2008130019 A

- WO 2005095686 A
- JP 3678511 B
- JP 3880456 B